# EUROPEAN PATENT APPLICATION

(11) **EP 4 722 990 A1**
(43) Date of publication of application: **08.04.2026**
(21) Application number: 24204212.5
(22) Date of filing: 02.10.2024
(51) Int. Cl.: G06N 10/20, G06N 10/70, G06N 10/40

(54) **METHOD FOR DETECTING TOPOLOGICAL ORDER IN A QUANTUM STATE OF A QUANTUM COMPUTER AND QUANTUM COMPUTER**

(71) Applicant: Technische Universität München, in Vertretung des Freistaats Bayern, 80333 München (DE)
(72) Inventor: Knap, Michael, Garching (DE); Liu, Yu-Jie, Garching (DE); Pollmann, Frank, Garching (DE); Xu, Wen-Tao, Garching (DE)
(74) Representative: Epping - Hermann - Fischer

(57) **Abstract**

A method for detecting topological order in a quantum state of a quantum computer (qc) comprising a plurality of qubits (qb) is specified herein, the method comprising the steps of:
- performing at least a partial quantum error correction on the quantum state using a global decoder, wherein a syndrome (syn) configuration of the quantum state is determined by measuring local stabilizer operators,
- measuring a 1-form symmetry operator (cp) on the at least partially quantum error corrected quantum state, and
- detecting topological order in the quantum state by measuring at least one open operator (oo) associated with the 1-form symmetry operator (cp) on the at least partially quantum error corrected quantum state.

Further, a quantum computer is specified herein.

## Description

A method for detecting topological order in a quantum state of a quantum computer comprising a plurality of qubits and a quantum computer are specified herein.

At least one object of certain embodiments is to provide a method for efficiently detecting and/or determining topological order in a quantum state of a quantum computer comprising a plurality of qubits with high accuracy. At least one further object of certain embodiments is to provide a quantum computer that can efficiently detect and/or determine topological order in a quantum state of a plurality of qubits with high accuracy.

These objects are solved by the method and the quantum computer according to the independent claims. Further advantageous embodiments and developments of the method and the quantum computer are specified in the dependent claims.

According to an aspect, the method is used for detecting topological order in a quantum state of a quantum computer comprising a plurality of qubits. Here and in the following, a qubit is a basic unit of quantum information. In particular, the qubit is a quantum mechanical two-state system with two linearly independent basis states. For example, the quantum computer comprises a plurality of qubits for processing and/or storing quantum information. The plurality of qubits of the quantum computer can be organized in one or more registers, wherein each register comprises or consists of multiple qubits, for example. In particular, the quantum computer performs operations by manipulating the qubits within one or more registers and/or by performing operations on the qubits within one or more registers.

In the following features of a single qubit are specified. One or more of these features can apply to at least one, a majority, or all of the plurality of qubits. In particular, the qubit is a physical qubit. A physical qubit is an actual physical realization of the qubit in the quantum computer. For example, the two basis states of the physical qubit can be identified with two different spin states of an electron, with two different spin states of a nuclear spin of an atom, with two different spin states or energy levels of a quantum dot, with two different energy levels of an atom or an ion, with two different polarizations of a photon, or with two different energy levels of a superconducting circuit. For example, a physical qubit exhibits decoherence, wherein the quantum information stored in the physical qubit becomes unrecoverable and is lost after a characteristic decoherence time. Decoherence can occur due to the interaction of the physical qubit with its environment and/or noise, for example.

For example, the plurality of physical qubits in the quantum computer, in particular the physical qubits in one register, form one, two or more logical qubits. The two basis states of the logical qubit correspond to two different entangled states of the plurality of physical qubits, for example. The logical qubit is a quantum unit of information that can be used by the quantum computer for performing actual quantum computations or for storing quantum information. For example, the logical qubit is a quantum unit of information that is processed by a quantum circuit. In particular, the quantum circuit comprises quantum gates that act on a plurality of logical qubits. For example, the logical qubit is less prone to decoherence than the physical qubit. In particular, the logical qubit has a longer decoherence time than the physical qubit.

In particular, the logical qubit can be subjected to quantum error correction. For example, quantum error correction at least partially protects the quantum information stored in the logical qubit by mitigating the influence of external noise and/or decoherence on the logical qubit. For example, a quantum error correction code, such as a stabilizer code, detects and/or corrects unwanted qubit errors of the physical qubits. In particular, the quantum error correction code can correct single qubit errors, such as bit-flip or phase errors of the physical qubits, without modifying the quantum information stored in the logical qubit.

For example, the plurality of qubits or the plurality of qubits in a register are arranged in the form of a regular array, in particular a two-dimensional array or a three-dimensional array. For example, the plurality of qubits in the array are coupled with each other only via local interactions, such as nearest neighbor interactions. Alternatively, the plurality of qubits can also be coupled via all-to-all interactions. For example, the quantum computer is a topological quantum computer. In particular, the topological quantum computer encodes one or more logical qubits in a non-local entanglement structure of the plurality of qubits. For example, the two basis states of the logical qubit correspond to two different quantum states of the plurality of qubits, wherein the action of any local operator on one of these basis states cannot transform this basis state into the other basis state, and vice versa. For example, an operator is a local operator if it acts only on qubits in a small, simply connected sub-region of the array. For example, a local operator only acts on one, two, three, four or a few neighboring qubits. For example, the basis states of the logical qubit are encoded in a degenerate ground state manifold of the plurality of qubits. In particular, the degenerate ground state manifold is topologically ordered if the ground states are locally indistinguishable such that matrix elements of any local operator between any pair of different ground states vanishes identically.

For example, any excited state of the plurality of qubits is separated from the degenerate ground states by an energy gap. For example, the topological quantum computer uses or is based on a topological quantum error correction code, such as a toric code, a two-dimensional or three-dimensional surface code, or a color code for quantum error correction.

The quantum state of the plurality of qubits can be any collective quantum state, i.e. a wave function, of the plurality of qubits. In particular, this includes the quantum states that are used for encoding the basis states of the one or more logical qubits, as well other states of the plurality of qubits outside of a code space of the quantum error correction code. Here, the code space corresponds to the space that is spanned only by the basis states of the one or more logical qubits.

For example, here and in the following a quantum state of the plurality of qubits is topologically ordered or has topological order, if it spontaneously breaks one or more 1-form symmetries that correspond to the specific type of topological order of the quantum state. In particular, a 1-form symmetry is a higher-form symmetry or generalized symmetry that has an associated conserved charge, wherein 1-form symmetry operators are operators with support on a one-dimensional line or on a two-dimensional surface, for example. In particular, a 1-form symmetry operator has support on a manifold with a co-dimension equal to one. For example, in a three-dimensional topological quantum error correction code the 1-form symmetry operator lives or is defined on a two-dimensional surface, in particular on a closed two-dimensional surface, whereas in a two-dimensional dimensional topological quantum error correction code the 1-form symmetry operator lives or is defined on a one-dimensional line, in particular on a closed one-dimensional line. In other words, the 1-form symmetry operator acts on qubits that are arranged on a closed two-dimensional surface or along a closed one-dimensional line, i.e. on a closed loop.

Here, the arrangement of the qubits, such as the one-, two-or three-dimensional arrangement of the qubits, can refer to an actual physical arrangement of the plurality qubits, in particular if the plurality of qubits is only coupled via local interactions. It is also possible that the arrangement of the qubits refers to a specific realization of the topological quantum error correction code using the plurality of qubits. For example, in a system where the plurality of qubits interact via all-to-all interactions, the arrangement of the qubits can refer to a geometry of an actual implementation of the couplings between the plurality of qubits that is used for realizing the respective topological quantum error correction code.

For example, the 1-form symmetry operator is a closed loop operator or closed surface operator that acts on qubits arranged on a closed loop or on a closed surface, respectively. For example, the spontaneous breaking of a 1-form symmetry can be detected if an associated 1-form symmetry operator acquires an expectation value of one or almost one. For example, 1-form symmetry operators for the toric code correspond to Wilson loop operators and `t Hooft loop operators. Furthermore, 1-loop symmetries are robust in the presence of weak noise that explicitly violates these symmetries. Accordingly, 1-form symmetries can be emergent symmetries and the method specified herein allows to detect such emergent 1-form symmetries efficiently and with high accuracy.

According to a further aspect of the method, at least a partial quantum error correction on the quantum state is performed using a global decoder, wherein a syndrome configuration of the quantum state is determined by measuring local stabilizer operators. For example, the local stabilizer operators are local in the sense that they only act on a subset of qubits, respectively, wherein the qubits in the subset are coupled to each other. In particular, the quantum error correction code that is used for at least partially correcting errors in the quantum state is a stabilizer code. For example, the stabilizer operators are a set of local operators that commute pairwise. For example, the stabilizer operators can be written as a tensor product of Pauli operators, wherein each Pauli operator acts on a respective qubit. In particular, the basis states of the one or more logical qubits are eigenstates of all stabilizer operators with a corresponding set of eigenvalues.

For example, the syndrome configuration is determined by applying the stabilizer operators, or a sub-set thereof, to the plurality of qubits and measuring their respective eigenvalues. In particular, the syndrome configuration corresponds to those eigenvalues that differ from the eigenvalues of the basis states of the one or more logical qubits. For example, the presence of at least one qubit error is detected, if the eigenvalue of one or more stabilizer operators change.

The decoder can correct one or more qubit errors by applying one or more appropriate correction operators to the plurality of qubits. For example, the decoder pairs up syndromes to correct bit flip errors. For example, a bit flip error can create two or more excitations that are connected by a string of flipped bits, for example, such that stabilizer operators at the respective ends of the string change their eigenvalues and indicate the bit flip error. The changed eigenvalues of the stabilizer operators at the two ends of the string correspond to the syndromes, for example. In particular, the bit flip errors can be corrected with a decoder that brings these excitations back together and annihilates them, e.g. by turning the string of flipped bits into a closed loop.

A local decoder only pairs up syndromes that are in close proximity. For example, a simple local decoder only corrects errors by flipping a single qubit if two directly adjacent stabilizer operators changed their eigenvalue and thus signal a qubit error. For example, a local decoder may not be able to correct qubit errors of two or more adjacent qubits. By contrast, the global decoder attempts to correct all errors, in particular all single-qubit errors, by removing all syndromes. For example, the global decoder pairs up all syndromes and flips the qubits along a path between the paired syndromes.

For example, the topological order of the quantum state can be robust in the presence of sufficiently weak fluctuations, such as noise, decoherence and/or other external influences. For example, in the presence of fluctuations the plurality of qubits may have an emergent 1-form symmetry. In particular, in states with emergent 1-form symmetry the expectation values of bare 1-form symmetry operators can decay exponentially with the length of the closed loop or the surface area of the closed surface, respectively, which can make emergent 1-form symmetries hard to detect. For example, in order to detect such an emergent 1-form symmetry it would be necessary to measure a decorated or fattened 1-form symmetry operator that does not decay with the length of the loop or the surface area of the surface, respectively. However, the form of such fattened or decorated string or loop operators might not be known in general. In particular, the at least partial quantum error correction of the quantum state as described herein allows to map at least one of these emergent 1-form symmetries to an exact or almost exact 1-form symmetry, such that bare 1-form symmetry operators can be simply measured for detecting the presence of topological order, for example.

The quantum error correction code can be limited by a fundamental quantum error correction threshold. In particular, it might not be possible to successfully correct all qubit errors if a physical error rate is too high.

Consequently, according to an aspect of the method, it is also possible to only measure a partial syndrome configuration, for example by measuring only a sub-set of the stabilizer operators. For example, only the stabilizer operators that are related to one of the 1-form symmetry operators that define the topological order are measured for determining the syndrome configuration. For example, in the case of the toric code it is possible to only correct X bit flip errors by measuring a corresponding syndrome configuration using only elementary plaquette operators, i.e. products of z-Pauli matrices around a plaquette, as stabilizer operators. For example, it is also possible to only correct Z bit flip errors by measuring a corresponding syndrome configuration using only elementary vertex operators, i.e. products of x-Pauli matrices adjacent to a vertex, as stabilizer operators.

For example, a success rate of the quantum error correction procedure can be higher, if only one type of qubit error is corrected in this step of the method. In general, it might not be possible to simultaneously successfully correct different types or all types of qubit errors that are related to syndromes of different types of stabilizer operators. In particular, it might not be possible to simultaneously map all emergent 1-form symmetries to exact 1-form symmetries using the quantum error correction step. Nevertheless, as discussed below, the method specified herein allows to detect the presence of topological order by further determining all other 1-form symmetries in subsequent steps, irrespective of a quantum error correction threshold.

According to a further aspect of the method, a 1-form symmetry operator is measured on the at least partially quantum error corrected quantum state. For example, the measurement of the 1-form symmetry operator on the at least partially quantum error corrected quantum state allows to determine if the quantum error correction was successful or partially successful. For example, after a successful quantum error correction at least one of the emergent 1-form symmetries is mapped to an exact or almost exact 1-form symmetry. In particular, the expectation value of the corresponding 1-form symmetry operator no longer decays exponentially with the length of the loop or the surface area of the closed surface, respectively, after the successful error correction step. Accordingly, measuring an expectation value of the 1-form symmetry operator that is close to one, for example, indicates that the quantum error correction step was successful.

For example, if a 1-form symmetry operator that is defined on a non-contractible closed loop is to be measured on the at least partially quantum error corrected quantum state, then the quantum state of the qubits should be a minimally entangled state that is an eigenstate of this non-contractible 1-form symmetry operator. For example, such a minimally entangled state is initially prepared on the plurality of qubits of the quantum computer and the method disclosed herein is subsequently used to verify if this minimally entangled state remains topologically ordered in the presence of noise and/or decoherence, for example.

According to a further aspect of the method, topological order is detected in the quantum state by measuring at least one open operator associated with the 1-form symmetry operator on the at least partially quantum error corrected quantum state. In particular, the open operator is measured after measuring the 1-form symmetry operator. For example, the open operator is an open string operator in the case of a two-dimensional topological quantum error correction code, or an open surface operator in the case of a three-dimensional topological quantum error correction code. For example, the open operator is an operator that is obtained by cutting the 1-form symmetry operator. In other words, the open operator basically corresponds to the 1-form symmetry operator with the only difference that it is defined on an open string with a boundary instead of a closed loop, or on an open surface with a boundary instead of a closed surface, respectively.

For example, the expectation value of the open operator is zero or close to zero if the quantum state is topologically ordered and finite if no topological order is present in the quantum state. Accordingly, topological order can be detected and/or determined by measuring the open operator after establishing the existence of the 1-form symmetry by measuring the 1-form symmetry operator. For example, applying the open operator to the at least partially quantum error corrected quantum state creates excitations or syndromes on its boundary, such that the expectation value of the open operator in a quantum state of the code space is zero. Together with the detection of the presence of 1-form symmetry in the previous step, measuring an expectation value of the open operator that is zero or close to zero thus allows to determine if topological order is present in the quantum state.

According to an embodiment, the method for detecting topological order in a quantum state of a quantum computer comprising a plurality of qubits comprises the steps of:
- performing at least a partial quantum error correction on the quantum state using the global decoder, wherein the syndrome configuration of the quantum state is determined by measuring local stabilizer operators,
- measuring the 1-form symmetry operator on the at least partially quantum error corrected quantum state, and
- detecting topological order in the quantum state by measuring at least one open operator associated with the 1-form symmetry operator on the at least partially quantum error corrected quantum state. In particular, the steps of the method are performed in the order specified above.

The method specified herein is based on the idea to provide an efficient and/or a relatively simple approach to detect and/or to determine topological order of a quantum state of a plurality of qubits in a quantum computer. In particular, fault tolerant quantum computing is believed to be necessary for performing complex quantum computational tasks. One route toward achieving fault tolerance is to protect quantum information against noise below a certain threshold by encoding the basis states of a logical qubit using topologically ordered quantum states of a plurality of physical qubits. In order to be able to utilize this approach for quantum computing, it is necessary to prepare and validate quantum states with topological order on quantum computers.

For example, topologically ordered quantum states can be prepared using specific quantum circuits, adiabatic state preparation, or variational optimization. However, the topological order can be destroyed if fluctuations, e.g. decoherence and/or noise, are sufficiently strong. Consequently, a further essential requirement is to be able to determine whether a quantum state indeed exhibits topological order or not after it is prepared. This is a difficult task even on a quantum computer. In particular, topological order is related to an entanglement structure of the quantum state. However, entanglement is exponentially hard to measure even on quantum computers, especially if the quantum state has long-distance correlations. Other approaches, such as measuring Fredenhagen-Marcu string-order parameters of topological phases can also be exponentially complex, because in this case exponentially small numbers need to be accurately measured, or these approaches are restricted to states with relatively short correlations and thus miss out on detecting large classes of topologically ordered quantum states. Furthermore, such approaches might require additional information about the 1-form symmetries of the underlying state, which a priori might not be known.

The method specified herein provides an efficient approach for detecting and/or determining the type of topological order in a quantum state of a plurality of qubits. In particular, the method specified herein combines quantum error correction and optionally a coarse graining of the quantum state to map emergent 1-form symmetries in the presence of noise to exact or almost exact 1-form symmetries the spontaneous breaking of which can be directly measured. This method thus allows to detect and determine spontaneously broken emergent 1-form symmetries in the presence of noise or other fluctuations that explicitly violate these 1-form symmetries. In addition to validating quantum state preparation, detecting and determining topological order is also important for the design of quantum materials.

According to a further aspect of the method, the open operator is an open string operator or an open surface operator. In particular, in contrast to the 1-form symmetry operator, the open operator is defined on a manifold with a boundary, i.e. it is defined on a one-dimensional line with open ends or on a two-dimensional surface with a boundary. For example, the open operator is an open string operator for the case of a two-dimensional topological quantum error correction code. For example, the open operator is an open surface operator for the case of a three-dimensional topological quantum error correction code.

According to a further aspect of the method, the type of topological order is determined by measuring a set of open operators that define the type of topological order. For example, the method allows to detect different types of topological order, such as Z₂ topological order of the toric code type or of the double semion type, Zₙ topological order with integer n≥3, or various other kinds of abelian or non-abelian topological orders.

According to a further aspect of the method, the global decoder is based on minimal weight perfect matching. For example, minimal weight perfect matching corrects errors by pairing all syndromes that have been measured using the stabilizer operators, or a sub-set thereof. For example, there is a high probability that a qubit error occurred in the local vicinity of two syndromes that are in close proximity, i.e. in the local vicinity of the locations where measurements of the local stabilizer operators show a wrong eigenvalue. For example, minimal weight perfect matching pairs syndromes in such a manner that their total distance is minimized.

According to a further aspect of the method, at least one of the 1-form symmetry operator is a closed loop operator or a closed surface operator. For example, the 1-form symmetry operator is a Wilson loop operator or a `t Hooft loop operator in the case of a two-dimensional topological error correction code. For example, one, some or all 1-form symmetry operators that are measured in any step of the method are closed loop operators or closed surface operators. For example, some loop operators or surface operators can be expressed as products of stabilizer operators.

According to a further aspect of the method, at least one of the 1-form symmetry operators is a loop operator with support on a non-contractible closed loop. For example, the qubits are arranged in the form of a two-dimensional array, wherein the array has a torus geometry or a torus topology. In this case, non-contractible loops are closed loops that wind around a hole of the torus, for example. In particular, a 1-form symmetry operator on a non-contractible loop cannot be expressed as a product of stabilizer operators. For example, none, one, some or all of the 1-form symmetry operators that are measured in any step of the method are loop operators defined on non-contractible closed loops of the qubit array.

According to a further aspect, the method further comprises a step of coarse graining the at least partially error corrected quantum state before measuring the at least one open operator on the coarse grained quantum state. For example, coarse graining allows to measure open operators on the coarse grained quantum state that are defined on shorter strings or on smaller open surfaces compared to open operators measured on the at least partially quantum error corrected quantum state. This may allow to perform the measurement of the open operator more efficiently.

In particular, topological order may only be present in the quantum state if more than one 1-form symmetry is spontaneously broken. In this case, the method can be repeated by detecting further syndromes, i.e. by measuring further stabilizer operators, distinct from the ones already analyzed, and further associated 1-form symmetries and string operators have to be measured.

According to a further aspect of the method, the coarse graining is performed using a renormalization group procedure. For example, the coarse graining is performed using a real space renormalization procedure. For example, the real space renormalization can be performed directly on the quantum state of the plurality of qubits.

According to a further aspect of the method, all steps of the method are realized as a quantum circuit on the quantum computer. For example, the coarse graining step can be implemented on the quantum computer using a renormalization-group quantum circuit comprising or consisting of Clifford gates. Alternatively, the coarse graining step can be performed using projective measurements of the quantum state and classical post-processing of the measurement results.

According to a further aspect of the method, all steps of the method are carried out by classical post-processing of projective measurements of the quantum state. For example, the quantum state of the plurality of qubits is projectively measured, e.g. by measuring the states of each of the plurality of qubits in a measurement basis. For example, the X, Y, and/or Z projections of the plurality of qubits are measured, and/or at least a subset or all of the local stabilizer operators are measured. This allows to compute the expectation values of at least a sub-set of the stabilizer operators and to subsequently compute properties of an at least partially error corrected quantum state on a classical computer, for example. These results can be further used to perform all further steps of the method on a classical computer, such as measuring the 1-form symmetry operator, measuring the open operator, and/or coarse graining the at least partially quantum error corrected quantum state.

According to a further aspect of the method, one or some of the steps of the method are realized as a quantum circuit on the quantum computer and subsequent steps are carried out by classical post-processing of projective measurements of the quantum state after application of the quantum circuit. For example, the method is a hybrid quantum-classical algorithm for detecting and/or determining topological order in a quantum state of a quantum computer. For example, the quantum error correction step is performed on the quantum computer and the subsequent steps are performed on a classical computer. For example, the quantum error correction step and the measurement of the 1-form symmetry operator are performed on the quantum computer and the subsequent steps are performed on a classical computer.

According to a further aspect of the method, an extensive sub-system of the plurality of qubits is selected before the syndrome configuration is determined, the quantum error correction is first performed by pairing only syndromes crossing a boundary of the sub-system, the measured syndrome configuration is folded into a torus geometry after removing pairs of syndromes crossing the boundary, and the remaining syndromes are paired in the torus geometry. In particular, these steps can be performed in the case of a two-dimensional topological quantum error correction code. For example, the extensive sub-system scales with the size of the array. For example, if a two-dimensional array has size L×L with L a length of the array, the sub-system can have size L/2×L/2, for example. In particular, the step of folding the syndrome configuration onto a torus can be advantageous if the array of qubits has a planar geometry and if at least one of the 1-form symmetry operators is a loop operator that is defined on a non-contractible closed loop. In particular, these steps are not necessary, if the qubits are already arranged in a torus geometry, for example. Moreover, further steps of the method including folding the syndrome configuration onto a torus geometry can be performed on a classical computer using post-processing of projective measurements, for example.

Further, a quantum computer is specified herein. All features that are disclosed for the method are also disclosed for the quantum computer, and vice versa.

According to an embodiment, the quantum computer comprises a plurality of qubits and is configured for detecting topological order in a quantum state of the plurality of qubits using the method described above. For example, the quantum computer comprises at least four, or at least 10, or at least 100 qubits for encoding one or two logical qubits. For example, the number of qubits of the quantum computer is at least two times larger, or at least 10 times larger, or at least 100 times larger than the number of logical qubits that are encoded in quantum states of the plurality of qubits. According to a further aspect of the quantum computer, the qubits are arranged in a regular two-dimensional array and are coupled to each other via nearest-neighbor interactions. For example, the dynamics of the plurality of qubits in the absence of any external control field and in the absence of any other coupling of the qubits to their environment is described by a lattice Hamiltonian with nearest neighbor interactions. For example, the two-dimensional array has a planar or a torus geometry. It is also possible that the plurality of qubits interact via all-to-all interactions. For example, the couplings between the plurality of qubits are programmed or configured such that the plurality of qubits realize a two-dimensional or a three-dimensional topological quantum error correction code. For example, if the plurality of qubits realize a two-dimensional topological quantum error correction code, the couplings between the plurality of qubits can be configured or programmed such that a planar geometry or a torus geometry of the coupled plurality of qubits is realized.

Further advantageous embodiments and developments of the method for detecting topological order in a quantum state of a quantum computer comprising a plurality of qubits and of the quantum computer become apparent from the following exemplary embodiments described in connection with the figures.

Figures 1 to 3 show different steps of a method for detecting topological order in a quantum state of a quantum computer comprising a plurality of qubits according to an exemplary embodiment.

Figure 4 shows a further step of a method for detecting topological order in a quantum state of a quantum computer comprising a plurality of qubits according to a further exemplary embodiment.

Figure 5 shows results of the method for detecting topological order in a quantum state of a quantum computer comprising a plurality of qubits according to an exemplary embodiment.

Figure 6 shows a schematic diagram of a quantum computer according to an exemplary embodiment.

Elements that are identical, similar, or have the same effect, are denoted by the same reference signs in the figures. The figures and the proportions of the elements shown in the figures are not to be regarded as true to scale. Rather, individual elements may be shown exaggeratedly large for better representability and/or better understanding.

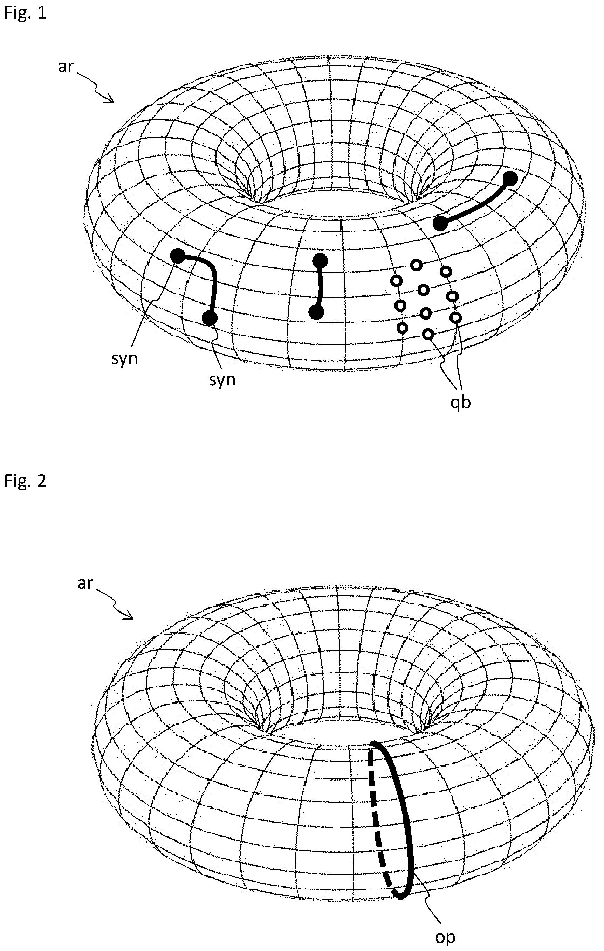

Figure 1 schematically shows a first step of a method for detecting topological order in a quantum state of a quantum computer qc comprising a plurality of qubits qb according to an exemplary embodiment. In the first step of the method, at least a partial quantum error correction is performed on the quantum state of the plurality of qubits qb using a quantum error correction code. In this example, the plurality of qubits qb are arranged in the form of an array ar on edges of a square lattice that has the geometry of a torus. In Figure 1 qubits qb are only explicitly shown on the edges of three adjacent elementary square plaquettes for better visualization, however one qubit qb is arranged on each edge of the square lattice. It is also possible that the array ar of qubits qb is based on a different lattice type and/or has a planar geometry, for example. Moreover, in this exemplary embodiment we restrict our discussion to the toric code as a simple example of a two-dimensional topological quantum error correction code, although the method described herein works analogously for other topological quantum error correction codes, in particular for surface codes.

For the case of the toric code two types of stabilizer operators can be defined, namely vertex operators *Aᵥ* = Π_{*i*∈}*ᵥXᵢ* that act on four qubits adjacent to a respective vertex *v* of the square lattice, and plaquette operators ***Bₚ*** = **Π_{*i*∈}*ₚZᵢ*** that act on four qubits located at the four edges of an elementary square plaquette ***p*** of the square lattice. Here, ***Xᵢ*** and ***Zᵢ*** denote the x-Pauli matrix and the z-Pauli matrix acting on qubit i, respectively. All stabilizer operators commute with each other and have eigenvalues +1 or -1. For example, the code space of the toric code is spanned by the four quantum states for which all stabilizer operators have eigenvalue +1. For example, the basis states of two logical qubits can be encoded in this code space. In particular, Wilson loop operators **Π_{*i*∈}*_{C}Zᵢ*,** where ***C*** is a contractible or a non-contractible loop on the square lattice, and `t Hooft loop operators **Π_{*i*∈}*_{Ĉ}Xᵢ,*** where ***Ĉ*** is a contractible or a non-contractible closed loop on the lattice dual to the square lattice, are 1-form symmetry operators op of the toric code.

For example, the four basis states of the code space can be distinguished by their different eigenvalues with respect to two different non-contractible Wilson loop operators that are defined on loops around the two different holes of the torus, respectively, whereas the action of two different non-contractible `t Hooft loop operators that are defined on loops around the two different holes of the torus, respectively, can transform states of the code space into each other, or vice versa. Accordingly, the four basis states of the code space are topologically ordered, as they are not symmetric under the action of the 1-form symmetry operators.

In the presence of fluctuations, such as noise and/or decoherence, at least some of the qubits qb can be subject to single qubit errors, such as phase errors or bit flip errors, and the resulting quantum states may no longer be in the code space. In the first step of the method according to this exemplary embodiment, at least some of these errors are detected by a measurement of the stabilizer operators, or of a sub-set thereof. For example, a single bit flip error due to the action of an Xᵢ operator on qubit i changes the eigenvalue of the two plaquette operators Bₚ that are directly adjacent to this qubit from +1 to -1. Each of the two plaquettes with the wrong eigenvalue -1 thus represents an error syndrome syn. The syndromes syn are denoted by black circles in Figure 1. A global decoder that is based on minimal weight perfect matching, for example, attempts to correct these errors by pairing up syndromes syn that are close to each other. For example, the global decoder applies X operators to qubits qb along the shortest possible path between the two plaquettes where the plaquette operators have the wrong eigenvalue -1. In Figure 1, such paths are schematically indicated by lines connecting two syndromes syn.

Similarly, a single bit flip error due to the action of an Zᵢ operator on qubit i changes the eigenvalue of the two vertex operators Aᵥ that are directly adjacent to this qubit qb from +1 to -1. Each of the two vertices with the wrong eigenvalue -1 thus represents an error syndrome syn. Again, a global decoder that is based on minimal weight perfect matching, for example, attempts to correct these errors by pairing up syndromes syn that are close to each other. For example, the global decoder applies Z operators to qubits qb along the shortest possible path between the two vertices where the vertex operators have the wrong eigenvalue -1.

In the presence of fluctuations, the 1-form symmetries are no longer exact symmetries but are emergent 1-form symmetries, where the expectation values of Wilson and/or `t Hooft loop operators decay exponentially with the length of the respective loop, for example. The error correction step described herein can map the emergent 1-form symmetry to an exact or almost exact 1-form symmetry by removing plaquette and/or vertex excitations, such that these loop operators no longer decay exponentially with the length of the loop. This allows for a simple detection of spontaneous breaking of 1-form symmetries by measuring the Wilson and/or `t Hooft loop operators and subsequently measuring one or more open operators oo that correspond to the Wilson and/or 't Hooft loop operators but instead are defined on an open string with two ends.

It might not be possible to successfully correct all errors simultaneously due to fundamental error correction limits, however. Accordingly, in the first step of the method it is also possible to solely correct a sub-set of errors by measuring only a sub-set of the stabilizer operators and correcting the syndromes syn accordingly. For example, in the first step of the method either the plaquette stabilizer operators or the vertex stabilizer operators can be measured. In this case, either X bit flip errors or Z bit flip errors can be corrected by the global decoder in the first step, respectively. Accordingly, either the expectation values of the Wilson loop operators or of the 't Hooft loop operators no longer decay exponentially with the length of the loop, if the error correction step was successful.

Figure 2 schematically shows a second step of the method for detecting topological order in a quantum state of a quantum computer qc comprising a plurality of qubits qb according to an exemplary embodiment. In the second step, a 1-form symmetry operator op is measured on the at least partially quantum error corrected quantum state. In this example, a non-contractible Wilson loop or a non-contractible 't Hooft loop is measured, as indicated by the thick black line in Figure 2. It is also possible to measure contractible Wilson loops or contractible 't Hooft loops in this step. In particular, if only X bit flip errors are corrected in the first step, a Wilson loop operator can be measured on the error corrected quantum state in the second step of the method. Similarly, if only Z bit flip errors are corrected in the first step, a `t Hooft loop operator can be measured on the error corrected quantum state in the second step. The measurement of the respective 1-form symmetry operator op allows to determine if the at least partial error correction in the first step of the method was successful and thus allows to determine if the emergent 1-form symmetry has been successfully mapped to an exact or almost exact 1-form symmetry.

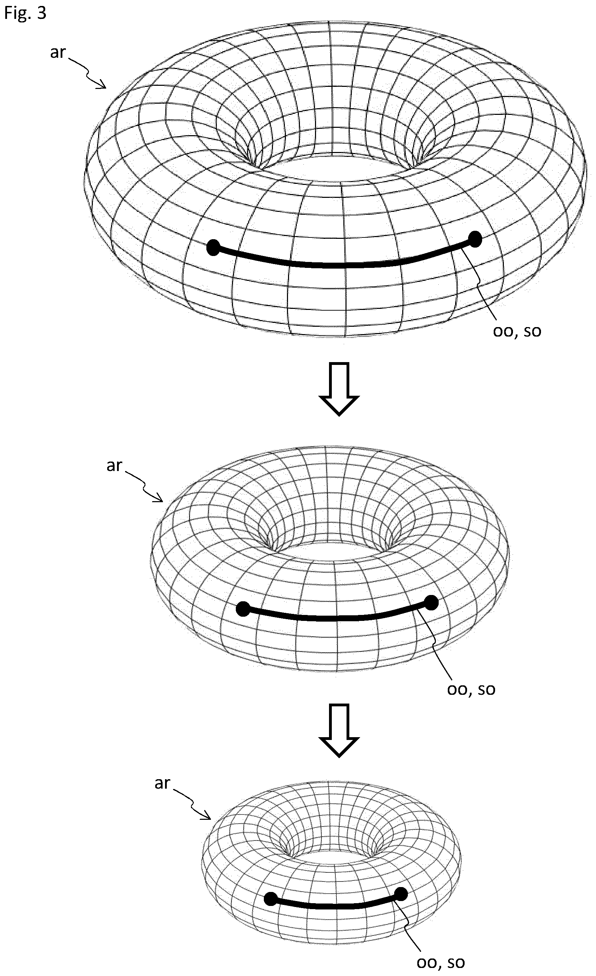

Figure 3 schematically shows a third step of the method for detecting topological order in a quantum state of a quantum computer qc comprising a plurality of qubits qb according to an exemplary embodiment. In the third step, an open string operator so is measured on the at least partially quantum error corrected quantum state. The open string operator so corresponds to the Wilson loop operator or the 't Hooft loop but is defined on an open string instead of a closed loop, i.e. it has two ends. In particular, if the Wilson loop operator was measured in the second step, the open string operator so that is measured in the third step corresponds to a product of ***Zᵢ*** operators along an open string on the square lattice, as indicated by the fat line with two ends in Figure 3. By contrast, if the 't Hooft loop operator was measured in the second step, the open string operator that is measured in the third step corresponds to a product of *Xᵢ* operators along an open string on the dual lattice.

An expectation value of the open string operator so that is zero or close to zero indicates that the emergent 1-form symmetry of the quantum state that was detected in the second step of the method is spontaneously broken and thus topological order is present. By contrast, an expectation value of the open string operator so that is finite indicates that the emergent 1-form symmetry is not spontaneously broken in the quantum state and thus topological order is absent. Accordingly, topological order can be detected and/or determined by measuring the 1-form symmetry operators op and/or the corresponding open string operators so associated with the respective type of topological order.

Optionally, the at least partially error corrected quantum state from the second step of the method is coarse grained, e.g. using a renormalization group procedure, before measuring the open string operator so. For example, under the coarse graining procedure the quantum state flows to a state on which the 1-form symmetry and open strings can be efficiently measured.

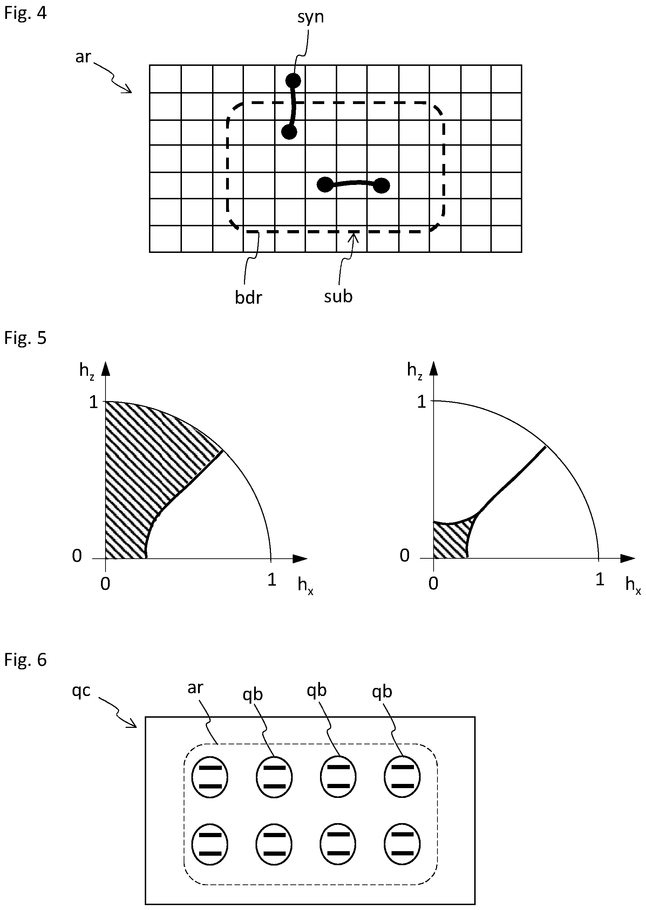

Figure 4 shows additional steps of the method for detecting topological order in a quantum state of a quantum computer qc comprising a plurality of qubits qb according to a further exemplary embodiment. For example, these additional steps can be used together with the steps of the method described in connection with Figures 1 to 3, if the array ar of qubits qb has a planar geometry rather than a torus geometry. In this case, an extensive, simply connected sub-system sub of the qubit array ar is selected before the syndrome configuration is measured in the error correction step. Further, the quantum error correction is first performed by pairing only syndromes syn crossing a boundary bdr of the sub-system sub. Accordingly, this partial error correction step reduces or removes correlations between the sub-system sub and the remainder of the qubit array ar. Subsequently, the measured syndrome configuration is folded onto a torus geometry after correcting the pairs of syndromes syn crossing the boundary bdr. This step can be performed using projective measurements of the quantum state and classical post-processing, for example. Afterwards, the error correction step is concluded by pairing the remaining syndromes syn in the torus geometry. In this case, all remaining steps of the method including the measurement of 1-form symmetry operators op and the coarse graining step are performed by processing the results of the projective measurements on a classical computer, for example.

Figure 5 shows numerical results of a simulation of the method for detecting topological order in a quantum state of a quantum computer qc comprising a plurality of qubits qb according to an exemplary embodiment. In particular, the left panel of figure 5 shows results after the second step of the method, whereas the right panel of figure 5 shows results after the third step of the method described in connection with Figures 1 to 3. Specifically, these results are obtained using a family of deformed toric code ground states as well as variational ground states of the toric code model in an applied field hₓ, h_{z} in x and z directions. In other words, the simulation is based on approximate ground states of the Hamiltonian ***H = -* Σ*ᵥAᵥ - ΣₚBₚ* -*hₓ* Σ*ᵢXᵢ - h_{z}*Σ*ᵢZᵢ*** on the square lattice with periodic boundary conditions, wherein the first two sums run over all vertices ***v*** and all plaquettes ***p*** of the square lattice, respectively, and the last two sums run over all qubits of the array. In particular, for *hₓ=0* and *h_{z}=0* the Hamiltonian H has a four degenerate, topologically ordered ground states that correspond to the code space of the toric code and have an exact 1-form symmetry that is spontaneously broken. For sufficiently small fields the ground state of the Hamiltonian *H* is still topologically ordered and has emergent 1-form symmetries, i.e. emergent Wilson loop and 't Hooft loop symmetries, that are spontaneously broken. For sufficiently large fields *h*ₓ and/or *h*_{z} the ground state of the Hamiltonian *H* is no longer topologically ordered, however.

The left panel of figure 5 shows results of a measurement of the Wilson loop operator as a function of hₓ and h_{z} in the second step of the method. In this case, in the first step of the method only a partial syndrome configuration was determined via a measurement of only the plaquette operators ***Bₚ*** as stabilizer operators. Subsequently only the X bit flip errors were corrected using a global decoder with minimal weight perfect matching. Accordingly, if the ground state of the Hamiltonian *H* for given values of the fields hₓ and h_{z} has an emergent Wilson loop symmetry, this error correction step maps it to a state with an exact or almost exact Wilson loop symmetry, where the expectation value of Wilson loop operators does not decay exponentially with the length of the loop anymore. This allows to detect the region with emergent Wilson loop symmetry with high accuracy by simply measuring an expectation value of the Wilson loop operators that is close to one when applied to the error corrected state. By contrast, if the ground state of the Hamiltonian H for given values of the fields *h*ₓ and *h*_{z} has no emergent Wilson loop symmetry, the measurement of the expectation value of the Wilson loop operators gives a value close to zero. The shaded area in the left panel of figure 5 indicates where the measured expectation value of the Wilson loop operators is one or close to one.

The right panel of figure 5 shows results of a measurement of an open string operator so as a function of hₓ and h_{z} in the third step of the method together with the results of the left panel. The open string operator so corresponds to the Wilson loop operator op but is defined on an open string with two ends. In particular, the shaded area in the right panel of Figure 5 indicates where the expectation value of the Wilson loop operator op is one and where simultaneously the expectation value of the open string operator so is zero. The latter expectation value indicates where the emergent 1-form symmetry is spontaneously broken.

The ground state of the Hamiltonian *H* has topological order of the toric code type, if it has a Wilson loop symmetry that is spontaneously broken and/or if it has a `t Hooft loop symmetry that is spontaneously broken. This region is indicated by the shaded region in the right panel of Figure 5. Accordingly, the right panel of figure 5 shows that the ground state of the Hamiltonian *H* is topologically ordered for sufficiently small values of the fields hₓ and h_{z}. The method described herein thus allows to determine if a quantum state of a plurality of qubits qb has topological order of the toric code type with high accuracy.

The method disclosed herein is not limited to detecting and determining Z₂ topological order of the toric code type. It can also be used for detecting and determining other types of topological order, such as Z₂ double semion topological order, Zₙ topological order, and other types of Abelian and non-abelian topological orders.

Figure 6 shows a schematic diagram of a quantum computer qc according to an exemplary embodiment. The quantum computer qc comprises a plurality of qubits qb arranged in a regular two-dimensional array ar with a planar or torus geometry. For example, each qubit qb is realized as a superconducting qubit, a trapped ion qubit, a neutral atom qubit, a quantum dot qubit, a spin qubit, or a photonic qubit. The quantum computer qc is configured for implementing a topological quantum error correction code, in particular a surface code. The quantum computer qc employs the method specified above for determining if an initially prepared quantum state of the plurality of qubits qb is topologically ordered and/or remains topologically ordered, in particular in the presence of decoherence and/or noise.

The invention is not restricted to the exemplary embodiments by the description on the basis of said exemplary embodiments. Rather, the invention encompasses any new feature and also any combination of features, which in particular comprises any combination of features in the patent claims and any combination of features in the exemplary embodiments, even if this feature or this combination itself is not explicitly specified in the patent claims or exemplary embodiments.

### References

- ar: array
- bdr: boundary
- oo: open operator
- op: 1-form symmetry operator
- qb: qubit
- qc: quantum computer
- so: open string operator
- sub: sub-system
- syn: syndrome

## Claims

1. A method for detecting topological order in a quantum state of a quantum computer (qc) comprising a plurality of qubits (qb), comprising the steps of:
- performing at least a partial quantum error correction on the quantum state using a global decoder, wherein a syndrome (syn) configuration of the quantum state is determined by measuring local stabilizer operators,
- measuring a 1-form symmetry operator (op) on the at least partially quantum error corrected quantum state, and
- detecting topological order in the quantum state by measuring at least one open operator (oo) associated with the 1-form symmetry operator (op) on the at least partially quantum error corrected quantum state.

2. The method according to the previous claim, wherein the open operator (oo) is an open string operator (so) or an open surface operator.

3. The method according to one of the previous claims, wherein the type of topological order is determined by measuring a set of open operators (oo) that define the type of topological order.

4. The method according to any of the previous claims, wherein the global decoder is based on minimal weight perfect matching.

5. The method according to any of the previous claims, wherein at least one of the 1-form symmetry operators (op) is a closed loop operator or a closed surface operator.

6. The method according to any of the previous claims, wherein at least one of the 1-form symmetry operators (op) is a closed loop operator with support on a non-contractible closed loop.

7. The method according to any of the previous claims, further comprising a step of coarse graining the at least partially error corrected quantum state before measuring the at least one open operator (oo) on the coarse grained quantum state, wherein the coarse graining is performed using a renormalization group procedure.

8. The method according to any of the previous claims, wherein
- all steps of the method are realized as a quantum circuit on the quantum computer (qc), or
- all steps of the method are carried out by classical post-processing of projective measurements of the quantum state, or
- some of the steps of the method are realized as a quantum circuit on the quantum computer (qc) and subsequent steps are carried out by classical post-processing of projective measurements of the quantum state after application of the quantum circuit.

9. The method according to any of the previous claims, wherein
- an extensive sub-system (sub) of the plurality of qubits (qb) is selected before the syndrome (syn) configuration is determined,
- the quantum error correction is first performed by pairing only syndromes (syn) crossing a boundary (bdr) of the sub-system (sub),
- the measured syndrome (syn) configuration is folded into a torus geometry after removing pairs of syndromes (syn) crossing the boundary (bdr), and
- the remaining syndromes (syn) are paired in the torus geometry.

10. A quantum computer (qc) comprising a plurality of qubits (qb), wherein the quantum computer is configured for detecting topological order in a quantum state of the plurality of qubits (qb) using the method according to any of claims 1 to 9.

11. The quantum computer (qc) according to claim 10, wherein the qubits (qb) are arranged in a regular two-dimensional or three-dimensional array (ar) and are coupled to each other via nearest-neighbor interactions.
